(19) Europäisches Patentamt / European Patent Office / Office européen des brevets

(11) EP 3 751 654 B1

(12) EUROPEAN PATENT SPECIFICATION

(45) Date of publication and mention of the grant of the patent:
15.01.2025 Bulletin 2025/03

(21) Application number: 19763879.4

(22) Date of filing: 20.02.2019

(51) International Patent Classification (IPC):
H01M 8/0662 (2016.01)     H01M 8/021 (2016.01)
H01M 8/124 (2016.01)     H01M 8/1231 (2016.01)
H01M 8/12 (2016.01)

(52) Cooperative Patent Classification (CPC):
H01M 8/0675; H01M 8/021; H01M 8/0662;
H01M 8/0687; H01M 8/1231; H01M 2008/1293;
Y02E 60/50

(86) International application number:
PCT/JP2019/006204

(87) International publication number:
WO 2019/171945 (12.09.2019 Gazette 2019/37)

(54) **FUEL CELL SYSTEM**

BRENNSTOFFZELLENSYSTEM

SYSTÈME DE PILES À COMBUSTIBLE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 09.03.2018   JP 2018042646

(43) Date of publication of application:
16.12.2020   Bulletin 2020/51

(73) Proprietor: Kabushiki Kaisha Toyota Chuo
Kenkyusho
Nagakute-shi, Aichi 480-1192 (JP)

(72) Inventors:
• NOZAKI, Hiroshi
  Nagakute-shi, Aichi 480-1192 (JP)

• HAYASHI, Yujiro
  Nagakute-shi, Aichi 480-1192 (JP)
• TANI, Toshihiko
  Nagakute-shi, Aichi 480-1192 (JP)
• MATSUO, Hidehito
  Nagakute-shi, Aichi 480-1192 (JP)

(74) Representative: Kramer Barske Schmidtchen
Patentanwälte PartG mbB
European Patent Attorneys
Landsberger Strasse 300
80687 München (DE)

(56) References cited:
WO-A1-2004/058927     JP-A- 2008 147 086
JP-A- 2009 513 335     JP-A- 2015 090 788
JP-A- 2017 216 071     US-A1- 2013 230 792

# EP 3 751 654 B1

## Description

FIELD OF THE INVENTION

The present invention relates to a fuel cell system, and more specifically relates to a fuel cell system having a mechanism for capturing Cr and/or S each being a poisonous substance for a fuel cell electrode.

BACKGROUND OF THE INVENTION

A fuel cell typically includes a unit cell including an electrolyte membrane, and an anode and a cathode each containing an electrode catalyst and attached to either side of the electrolyte membrane. An interconnector, which may be referred to as "separator" or "collector", having a gas channel is disposed on either side of the unit cell. The fuel cell typically has a stacking structure (fuel cell stack) of a plurality of such unit cells and a plurality of interconnectors.

The term "interconnector" means a component interconnecting between the unit cells in a narrow sense. In the present invention, however, the term includes not only "the interconnector in the narrow sense" but also a component that supplies a reaction gas to a unit cell located at an end of the fuel cell stack and supplies/receives electrons to/from the unit cell.

Fuel cells are classified into various types such as a solid oxide type, a solid polymer type, an alkaline type, and a phosphoric acid type, etc. according to the type of electrolyte. In each type, poisoning of an electrode by a poisonous substance deteriorates cell performance. To address such a difficulty, various approaches have been provided.

For example, Patent Literature 1 discloses a fuel cell system including

a solid oxide fuel cell,
a heat exchanger to heat air to be supplied to a cathode of the solid oxide fuel cell, and
a poisonous element remover provided between the cathode and the heat exchanger and including an absorbent to remove poisonous elements including chromium, sulfur, and/or boron.

Patent Literature 1 describes that using the absorbent made of the same material (perovskite oxide) as a cathode material makes it possible to trap the poisonous element before the poisonous element reacts with the cathode.

Patent Literature 2 discloses a sulfur-resistant anode collector layer containing Ni, Co, and samarium-doped ceria ($Ce_{0.85}Sm_{0.15}O_{1.925}$).

Patent Literature 2 describes that using such an anode collector layer converts $H_2S$ contained in a fuel gas into $SO_x$ so that absorption of $H_2S$ is minimized.

Patent Literature 3 discloses an interconnector for a solid oxide fuel cell including perovskite oxide and silica, wherein the composition of the perovskite oxide is expressed by $La_{1-x}Sr_xTi_{1-y}Fe_yO_{3-\delta}$, where $0.4 \leq x \leq 0.6$ and $0 < y \leq 1$ are satisfied and $\delta$ is determined to satisfy a charge neutrality condition, and the content of silica is 5 to 14 mass%.

Patent Literature 3 describes that using the interconnector including no Cr prevents deterioration in cell performance due to Cr poisoning.

To suppress poisoning of a cathode or an anode of a solid oxide fuel cell by Cr or S, Patent Literatures 1 to 3 disclose the respective methods of

(a) removing the poisonous element contained in the oxidizer gas using the same material (perovskite oxide) as the cathode material,
(b) converting $H_2S$ contained in the fuel gas into $SO_X$ using the material containing samarium-doped ceria, and
(c) using the perovskite oxide containing no Cr as a material of the interconnector.

However, there has been no case where an oxide having a corundum structure or a titania-based oxide is used to prevent the electrode from being poisoned by a poisonous substance.

[Citation List]

[Patent Literature]

Patent Literature 1: Japanese Unexamined Patent Application Publication No. 2017-216071
Patent Literature 2: Japanese Patent No. 5608674
Patent Literature 3: Japanese Patent No. 5364393

US 2013/0230792 A1 discloses coatings for metal interconnects to reduce SOFC degradation.

SUMMARY OF THE INVENTION

An object of the invention is to provide a novel fuel cell system capable of capturing Cr and/or S each being a poisonous substance for a fuel cell electrode.

To achieve the object, a fuel cell system according to the present invention has a configuration in accordance with claim 1.

Cr and S may each act as a poisonous substance for a fuel cell electrode. The oxide having the corundum structure and the titania-based oxide each has the function of capturing Cr and S. Accordingly, in a case where such an oxide is provided in an appropriate portion on the fuel gas supply passage and/or the oxidizer gas supply passage, it is possible to prevent the fuel cell electrode from being poisoned by Cr or S.

BRIEF DESCRIPTION OF THE DRAWINGS

FIG. 1 is a schematic diagram of a fuel cell system having a solid oxide fuel cell of an external reforming type;
FIG. 2 is a schematic diagram of a solid oxide fuel cell stack having flat interconnectors;
FIG. 3 is a photograph of an alumina honeycomb (Example 2) ;
FIG. 4 is a photograph of an alumina honeycomb coated with titania (Example 1);
FIG. 5 is a schematic diagram of a poisoning test;
FIG. 6 is XRD patterns of poisoning-source-side surfaces of LSCF sintered bodies after the poisoning test; and
FIG. 7 is a photograph of an interconnector material coated with an alumina/titania mixed slurry.

DETAILED DESCRIPTION OF THE PREFERRED EMBODIMENTS

One embodiment of the present invention will now be described in detail.

[1. Fuel Cell System]

A fuel cell system according to the present invention includes

a fuel cell,
a fuel gas supply passage supplying a fuel gas to an anode of the fuel cell,
an oxidizer gas supply passage supplying an oxidizer gas to a cathode of the fuel cell, and
a capturing component provided in an appropriate portion on the fuel gas supply passage and/or the oxidizer gas supply passage and containing a capturing agent to capture a poisonous substance.

[1.1 Fuel Cell]

The present invention can be applied to all types of fuel cells . Examples of the fuel cell to which the present invention is applied include a solid oxide fuel cell, a solid polymer fuel cell, an alkaline fuel cell, and a phosphoric acid fuel cell.

Of these, the solid oxide fuel cell (SOFC) may include a peripheral component made of a material containing Cr (for example, Fe-Cr stainless steel) and is operated at high temperature. The present invention is therefore preferably applied to the solid oxide fuel cell.

[1.2 Fuel Gas Supply Passage]

The term "fuel gas supply passage" refers to a passage to supply a fuel gas from a fuel gas source to the anode of the fuel cell. Examples of structural components of the fuel gas supply passage include

(a) a gas tube connecting between the fuel gas source and the anode of the fuel cell,
(b) a heat exchanger to heat the fuel gas to be supplied to the anode,
(c) a reformer for steam reforming of a hydrocarbon fuel gas, and
(d) a gas channel (interconnector) for the fuel gas inside the fuel cell.

[1.3 Oxidizer Gas Supply Passage]

The term "oxidizer gas supply passage" refers to a passage to supply an oxidizer gas from an oxidizer gas source to the cathode of the fuel cell. Examples of structural components of the oxidizer gas supply passage include

(a) a gas tube connecting between the oxidizer gas source and the cathode of the fuel cell,
(b) a heat exchanger to heat the oxidizer gas to be supplied to the cathode, and
(c) a gas channel (interconnector) for the oxidizer gas inside the fuel cell.

[1.4 Capturing Component]

The term "capturing component" refers to a component for capturing the poisonous substance. The capturing component is provided in an appropriate portion on the fuel gas supply passage and/or the oxidizer gas supply passage.
In the present invention, details of the capturing component such as a structure and a setting method are not limited as long as the capturing component can capture the poisonous substance before the electrode is poisoned. Examples of the capturing component include

(a) a filter or a honeycomb including a capturing agent and provided in the middle of the gas tube of the fuel gas supply passage or the oxidizer gas supply passage,
(b) a filter or a honeycomb having a base material coated with the capturing agent, and
(c) a thin film (poisoning prevention layer) including the capturing agent and provided on an inner surface of a gas channel of the interconnector.

In the case of the solid oxide fuel cell, the capturing component is preferably a poisoning prevention layer formed on the inner surface of the gas channel of the interconnector of the fuel cell.
The capturing agent needs to be heated to an appropriate adsorption temperature to adsorb the poisonous substance. On the other hand, the solid oxide fuel cell is operated at high temperature. Accordingly, when the poisoning prevention layer is formed on the inner surface of the gas channel of the interconnector of the solid oxide fuel cell, it is unnecessary to provide a heat source to maintain the poisoning prevention layer at the appropriate temperature.
Although various materials have been used for the interconnector of the solid oxide fuel cell, use of inexpensive Fe-Cr alloy (so-called ferritic stainless steel) is now specifically investigated. However, since the interconnector is disposed close to the electrode, if the Fe-Cr alloy is used for the material of the interconnector, the electrode is poisoned by the interconnector. In contrast, when a poisoning prevention layer is formed in the inner surface of the gas channel of the interconnector, Cr poisoning of the electrode can be suppressed even if the interconnector is made of a material to be a poisoning source such as Fe-Cr alloy.

[1.5 Poisonous Substance]

In the present invention, the term "poisonous substance" refers to Cr and/or S.
In a case where a material containing Cr (for example, Fe-Cr stainless steel) is used for one of the fuel gas supply passage and the oxidizer gas supply passage, when the gas supply passage is exposed to high temperature, a vapor containing Cr is generated from the material containing Cr. The vapor containing Cr poisons, for example, the cathode and the anode (in particular, the cathode) of the solid oxide fuel cell, causing deterioration in fuel cell performance.
The fuel gas may contain a sulfur constituent derived from the raw material. When air is used as the oxidizer gas, the air may contain a sulfur constituent. When such a sulfur constituent is supplied to the anode and/or the cathode of the fuel cell, the sulfur constituent poisons the anode and/or the cathode, causing deterioration in fuel cell performance.
In the present invention, the capturing component is used to capture Cr and/or S before the electrode is poisoned by Cr and/or S that has entered the gas supply passage of the fuel cell.

[1.6 Capturing Agent]

In the present invention, the capturing agent contains the oxide having the corundum structure or the titania-based oxide. The present invention is different in this point from the existing fuel cell systems. The capturing agent may contain one or both of such oxides.

[1.6.1 Oxide Having Corundum Structure]

Examples of the oxide having the corundum structure include alumina, $\alpha$-$Ga_2O_3$ (gallium oxide), $\alpha$-$Ti_2O_3$

(titanium oxide), $\alpha$-$In_2O_3$ (indium oxide), $\alpha$-$Fe_2O_3$ (iron oxide), $\alpha$-$Cr_2O_3$ (chromium oxide), $\alpha$-$V_2O_3$ (vanadium oxide), and $\alpha$-$Rh_2O_3$ (rhodium oxide).

Alumina is preferable as the oxide having the corundum structure. This is because alumina is easily available and thermally stable and easily dissolves Cr as seen in ruby.

The oxide having the corundum structure (in particular, alumina) serves as the capturing agent of Cr and S. The reason for this is as follows.

That is, the oxide having the corundum structure easily forms a solid solution such as $Fe_2O_3$-$Cr_2O_3$, $Ga_2O_3$-$Cr_2O_3$, $Al_2O_3$-$Cr_2O_3$, $V_2O_3$-$Cr_2O_3$, and $Al_2O_3$-$Cr_2O_3$, and thus potentially has a capturing effect of Cr as typically seen in alumina.

[1.6.2 Titania-Based Oxides]

The term "titania-based oxide" refers to an oxide mainly containing titanium oxide ($TiO_x$).

Examples of the titania-based oxide include

(a)

$$TiO_x \ (1.5 \le x \le 2.0),$$

and

(b)

$$TiO_x \ (1.5 \le x \le 2.0)$$

dissolving at least one element selected from a group consisting of alkali metal elements (Li, Na, K, Rb, Cs, Fr), alkaline-earth metal elements (Be, Mg, Ca, Sr, Ba, Ra), and rare-earth metal elements (Sc, Y, La to Lu) (hereinafter referred to also as "titania-based solid solution").

The titania-based oxide (in particular, titania-based solid solution) serves as the capturing agent of Cr and S. The reason for this is as follows.

That is, basicity of titania contributes to the capturing effect of Cr and S. The solid solution maintains the basicity and thus also serves as the capturing agent.

[2. Specific Example]

[2.1 Specific Example of Fuel Cell System]

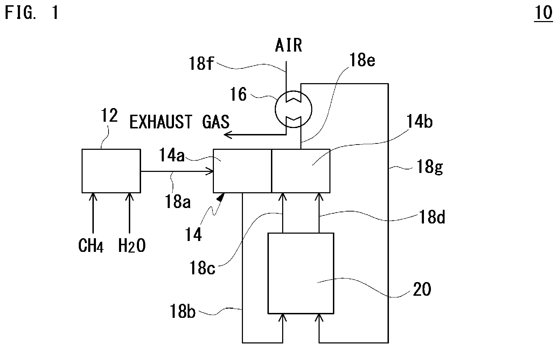

The present invention can be applied to various fuel cell systems. FIG. 1 shows a schematic diagram of a fuel cell system having a solid oxide fuel cell of an external reforming type. In FIG. 1, a fuel cell system 10 includes a vaporizer 12, a reformer 14, a heat exchanger 16, and a fuel cell (solid oxide fuel cell) 20.

[2.1.1 Vaporizer]

The vaporizer 12 vaporizes hydrocarbon (for example, methane) and water as raw materials for synthesizing a reformed gas and supplies such vapor to the reformer 14. Two respective inlets of the vaporizer 12 are connected to an undepicted hydrocarbon source and an undepicted water source. An outlet of the vaporizer 12 is connected to an inlet of the reformer 14 via a gas tube 18a.

[2.1.2 Reformer]

The reformer 14 generates a mixed gas (synthesis gas) of CO and $H_2$ through steam reforming of hydrocarbon. Since the steam reforming reaction is an endothermic reaction, the reformer 14 includes a reforming part 14a for steam reforming and a combustion part 14b to supply heat necessary for the steam reforming reaction to the reforming part 14a.

The inlet of the reforming part 14a is connected to the outlet of vaporizer 12 via the gas tube 18a. An outlet of the reforming part 14a is connected to an inlet of an anode of the fuel cell 20 via a gas tube 18b.

The combustion part 14b reacts an unreacted fuel ($H_2$, CO) contained in anode off-gas with residual oxygen contained in cathode off-gas, and supplies the combustion heat to the reforming part 14a. Two inlets of the combustion part 14b are connected to an outlet of the anode and an outlet of the cathode of the fuel cell 20 via gas tubes 18c and 18d, respectively. An outlet of the combustion part 14b is connected to an exhaust-gas-side inlet of the heat exchanger 16 via a gas tube 18e.

[2.1.3 Fuel Cell]

The fuel cell 20 generates electric power using the fuel such as hydrocarbon, CO, and $H_2$, and oxygen. The fuel cell 20 of FIG. 1 is a solid oxide fuel cell. The solid oxide fuel cell is described in detail later.

[2.1.4 Heat Exchanger]

The heat exchanger 16 heats air to be supplied to the cathode of the fuel cell 20. Since the solid oxide fuel cell is operated at approximately 700°C, if air at room temperature is directly supplied to the cathode, temperature of the fuel cell 20 is lowered. In the solid oxide fuel cell, therefore, the heat exchanger 16 is typically used to heat the air.

The atmosphere-side inlet of the heat exchanger 16 is connected to the atmosphere via a gas tube 18f. The atmosphere-side outlet of the heat exchanger 16 is connected to the inlet of the cathode of the fuel cell 20 via a gas tube 18g.

[2.1.5 Fuel Gas Supply Passage, Oxidizer Gas Supply Passage, and Capturing Component]

In the fuel cell system 10 of FIG. 1, the fuel gas supply passage includes the vaporizer 12, the gas tube 18a, the reforming part 14a, the gas tube 18b, and an anode gas channel of the fuel cell 20.

The oxidizer gas supply passage includes the gas tube 18f, the heat exchanger 16, the gas tube 18g, and a cathode gas channel of the fuel cell 20.

In the present invention, the capturing component is provided in an appropriate portion on the fuel gas supply passage and/or the oxidizer gas supply passage.

For example, the capturing component may be provided in the middle of the gas tube 18b or 18g. This advantageously allows the capturing component to be easily replaced when the capturing component is reduced in ability of capturing the poisonous substance.

However, the capturing agent needs to be maintained at a certain temperature or higher to capture the poisonous substance. Specifically, the temperature of the capturing agent is preferably 300°C or higher, and more preferably 600°C or higher. A heat source is therefore required to maintain the capturing component at an appropriate temperature if the capturing component is provided in the middle of the gas tube 18b or 18g. Further, if a Cr emission source and/or a S emission source additionally exist between the setting point of the capturing component and the fuel cell 20, the poisoning prevention effect is insufficient.

In contrast, when the capturing component is provided on a surface of the interconnector of the fuel cell 20, the capturing component is maintained at a temperature equal to the temperature of the fuel cell 20. It is therefore unnecessary to provide the heat source to maintain the capturing component at an appropriate temperature. In addition, the interconnector is located closest to the anode or the cathode. The capturing component is therefore preferably formed on the inner surface of the gas channel of the interconnector of the fuel cell 20.

[2.2 Specific Example of Fuel Cell Stack]

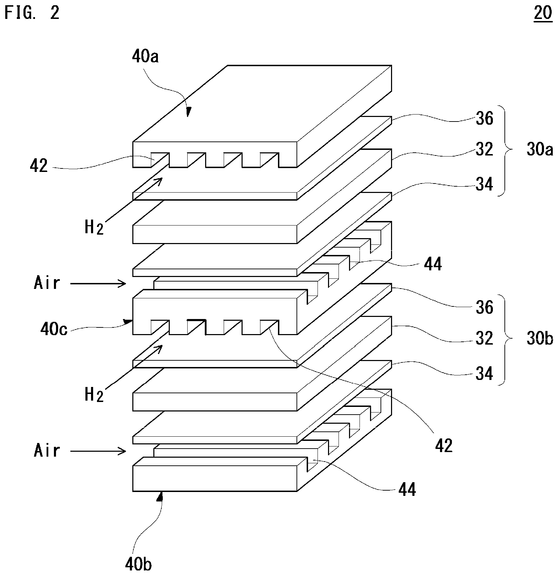

The present invention can be applied to fuel cell systems having various fuel cell stacks. FIG. 2 shows a schematic diagram of a solid oxide fuel cell stack having flat interconnectors. In FIG. 2, a fuel cell stack 20 includes unit cells 30a and 30b and interconnectors 40a to 40c.

FIG. 2 merely exemplarily illustrates the two unit cells 30a and 30b, and the fuel cell stack may include any optional number of unit cells for each purpose.

[2.2.1 Unit Cell]

The unit cells 30a and 30b each include an electrolyte membrane 32, and a cathode 34 and an anode 36 bonded to two respective surfaces of the electrolyte membrane 32. In the solid oxide fuel cell, an undepicted intermediate layer is typically provided between the electrolyte membrane 32 and the cathode 34 to prevent them from reacting with each other. In the present invention, various materials may be used for each of the electrolyte membrane 32, the cathode 34, the anode 36, and the intermediate layer.

In the solid oxide fuel cell, materials of the electrolyte membrane 32 typically include yttria-stabilized zirconia (YSZ), scandia-stabilized zirconia (ScSZ), and lanthanum gallate ($LaGaO_3$).

Materials of the cathode 34 typically include lanthanum manganite ($LaAeMnO_3$, where Ae is Sr or Ce), lanthanum cobaltite ($LaSrCoO_3$), lanthanum ferrite ($LaSrFeO_3$), lanthanum strontium cobalt ferrite ($LaSrCoFeO_3$), lanthanum nickel oxide ($LaNiO_3$), and samarium cobaltite ($SmSrCoO_3$).

Materials of the anode 36 typically include composite materials of nickel oxide and a solid electrolyte such as NiO-YSZ and NiO-ScSZ.

Materials of the intermediate layer typically include gadolinium-doped ceria (GDC).

[2.2.2 Interconnector]

The interconnectors 40a to 40c are flat and provided at an upper end of the unit cell 30a, a lower end of the unit cell 30b, and between the unit cells 30a and 30b, respectively.

The interconnector 40a is provided at the anode 36-side end of the fuel cell stack 20. The interconnector 40a has a fuel gas channel 42 in its surface adjacent to the unit cell 30a.

The interconnector 40b is provided at the cathode 34-side end of the fuel cell stack 20. The interconnector 40b has an oxidizer gas channel 44 in its surface adjacent to the unit cell 30b.

The interconnector 40c is provided between the unit cells 30a and 30b. The interconnector 40c has an oxidizer gas channel 44 in its surface adjacent to the unit cell 30a. The interconnector 40c further has a fuel gas channel 42 in its surface adjacent to the unit cell 30b.

[2.2.3 Capturing Agent]

As described above, the capturing agent is preferably in a form of a thin film (poisoning prevention layer) including the capturing agent formed on an inner surface of the gas channel (the fuel gas channel 42 or the oxidizer gas channel 44) of each of the interconnectors 40a to 40c.

The term "inner surface of the gas channel" refers to a surface to be in direct contact with the reaction gas (fuel gas or oxidizer gas) among the surfaces of the interconnectors 40a to 40c, i.e., does not include a surface to be in direct contact with the cathode 34 or the anode 36.

That is, no poisoning prevention layer is formed on a surface in direct contact with the cathode 34 or the anode 36 among the surfaces of the interconnectors 40a to 40c so that each of the unit cells 30a and 30b is electrically connected to some of the interconnectors 40a to 40c.

The cathode 34 or the anode 36 is poisoned by Cr via a gas phase. Hence, when Fe-Cr alloy is used for the interconnectors 40a to 40c, substantially no Cr poisoning occurs through solid-phase diffusion even if some of the interconnectors 40a to 40c is in direct contact with the cathode 34 or the anode 36.

[3. Effect]

Cr and S may each act as a poisonous substance for the fuel cell electrode. The oxide having the corundum structure and the titania-based oxide each has the function of capturing Cr and S. Accordingly, in a case where such an oxide is provided in an appropriate portion on the fuel gas supply passage and/or the oxidizer gas supply passage, it is possible to prevent the fuel cell electrode from being poisoned by Cr or S.

[Examples]

(Examples 1 and 2 and Comparative Examples 1 and 2)

[1. Sample Preparation]

[1.1 Example 1]

Titania powder (rutile type, from Kojundo Chemical Laboratory Co., Ltd.), ethanol, a dispersant (MALIALIM (registered tradename), from NOF CORPORATION), and a binder (S-LEC (registered tradename), from SEKISUI CHEMICAL CO., LTD.) were mixed by a planetary ball mill (from Fritsch Japan Co., Ltd) to prepare a titania slurry.

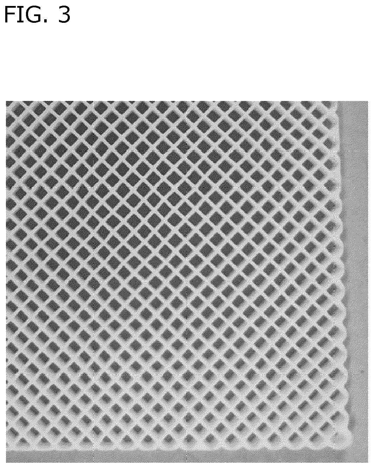

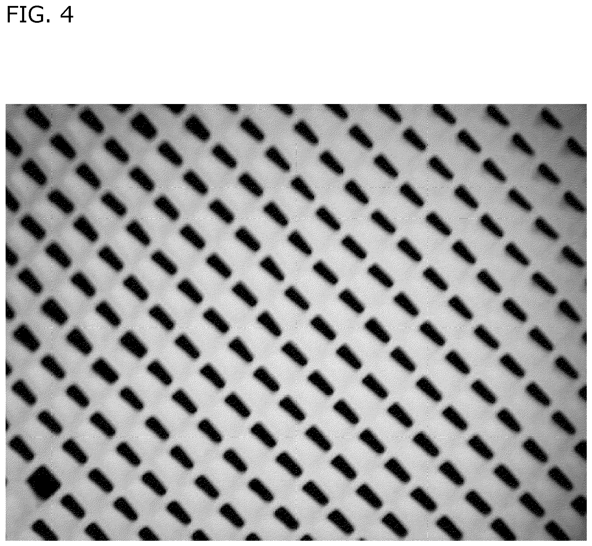

A surface of an alumina honeycomb was dip-coated with the titania slurry to form a titania thin film on the surface of the alumina honeycomb. FIG. 3 shows a photograph of the alumina honeycomb (aeration setter, from MINO CERAMIC CO., LTD.) used in the experiment. FIG. 4 shows a photograph of the alumina honeycomb coated with titania (Example 1).

[1.2 Example 2]

The alumina honeycomb used in Example 1 was directly used for a test.

[2. Test Method]

An LSCF (LaSrCoFeO$_3$, lanthanum strontium cobalt ferrite) sintered body used for the cathode of the SOFC was used as a specimen (poisoning object). The LSCF sintered body was prepared through sintering for 10 hours at 1100°C in the atmosphere.

SUS 304 was used as a chromium source, and sulfide-dispersed lead-free copper alloy (CAC411) was used as a sulfur source.

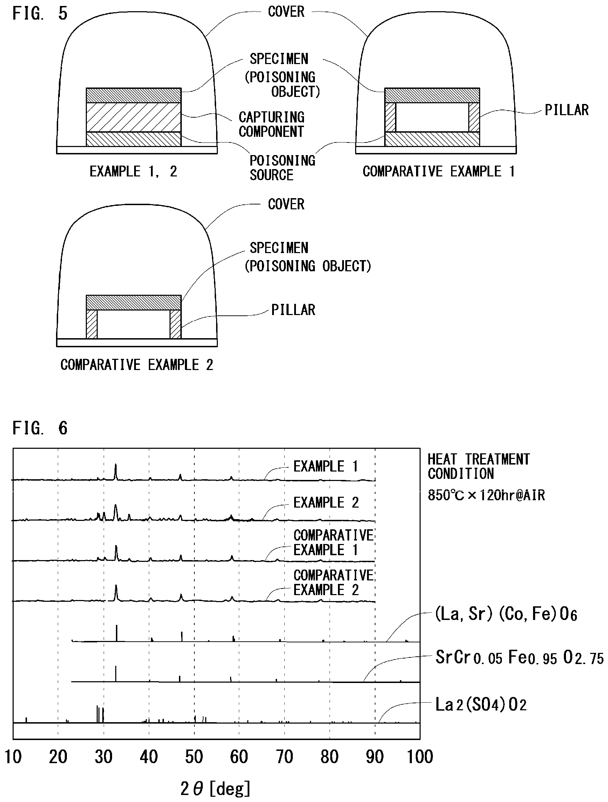

FIG. 5 shows a schematic diagram of the poisoning test. In Examples 1 and 2, the capturing component (titania-coated alumina honeycomb or alumina honeycomb) was placed on the poisoning sources (chromium source and sulfur source), and the LSCF sintered body was further placed on the capturing component. Such a sample was accommodated in an alumina crucible and subjected to heat treatment. The heat treatment was performed for 120 hours at 850°C in the atmosphere.

In Comparative Example 1, pillars having the same height as the alumina honeycomb were set up on the poisoning sources, and the LSCF sintered body was placed on the pillars. Such a sample was accommodated in an alumina crucible and subjected to heat treatment under the same condition as in Example 1.

In Comparative Example 2 (reference), pillars having the same height as the alumina honeycomb were set up without the capturing component, and the LSCF sintered body was placed on the pillars. Such a sample was accommodated in an alumina crucible and subjected to heat treatment under the same condition as in Example 1.

[3. Results]

[3.1 XRD]

After the poisoning test, X-ray diffraction (XRD) measurement was performed on the poisoning-source-side surface of each LSCF sintered body. FIG. 6 shows each XRD pattern of the poisoning-source-side surface of the LSCF sintered body after the poisoning test. In Example 1, impurity peaks other than the peaks derived from the LSCF were smallest in number and low in intensity.

[3.2 XRF]

After the poisoning test, X-ray fluorescence (XRF) measurement was performed on the poisoning-source-side surface of each LSCF sintered body. Table 1 shows the XRF measurement result of the poisoning-source-side surface of the LSCF sintered body after the poisoning test. Table 1 reveals the following.

(1) In Example 2 (alumina honeycomb), the amount of S was large compared with Comparative Example 1, but the amount of Cr was small, approximately 1/3 of that in Comparative Example 1.
(2) In Example 1 (titania-coated alumina honeycomb), the S amount and the Cr amount were each not large, i.e., at the same level as that in Comparative Example 2.
(3) Alumina exhibited a capturing effect that was large for vanadium but moderate for lead, copper, and bismuth. Titania exhibited a capturing effect that was large for bismuth but moderate for zinc, lead, and copper.

[Table 1]

| Sample | [mass%] | | | | | | | | | | | |
|---|---|---|---|---|---|---|---|---|---|---|---|---|
| | S | V | Cr | Fe | Co | Cu | Zn | Sr | Zr | La | Pb | Bi |
| Comparative Example 1 | 4.7 | 0.14 | 2.8 | 23 | 6.0 | 0.52 | 0.80 | 19 | 0.15 | 42 | 0.77 | 0.81 |
| Example 2 | 6.7 | <0.1 | 1.0 | 23 | 6.2 | 0.36 | 0.87 | 18 | 0.13 | 42 | 0.52 | 0.64 |
| Example 1 | 3.5 | <0.1 | <0.1 | 25 | 6.4 | 0.18 | 0.14 | 19 | 0.14 | 46 | 0.33 | <0.1 |
| Comparative Example 2 | 3.4 | <0.1 | <0.1 | 25 | 6.4 | <0.1 | <0.1 | 19 | 0.13 | 46 | <0.1 | <0.1 |

(Example 3)

[1. Sample Preparation]

Titania powder (rutile type, from Kojundo Chemical Laboratory Co., Ltd.), alumina powder (from Kojundo Chemical Laboratory Co., Ltd.), ethanol, a dispersant (MALIALIM (registered tradename), from NOF CORPORATION), and a binder (S-LEC (registered tradename), from SEKISUI CHEMICAL CO., LTD.) were mixed by a planetary ball mill (from Fritsch Japan Co., Ltd) to prepare an alumina/titania mixed slurry.
A surface of an interconnector material (Fe-Cr alloy) was dip-coated with the alumina/titania mixed slurry to form an alumina/titania thin film.

[2. Evaluation]

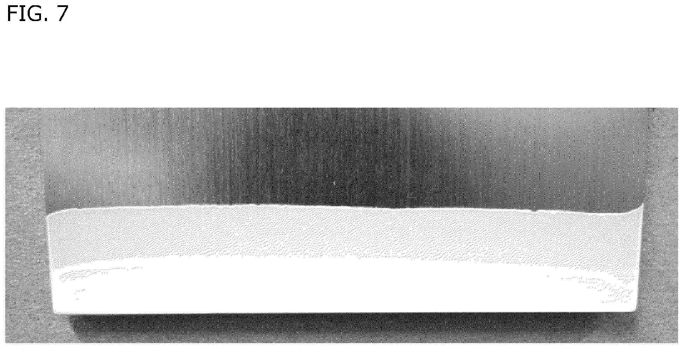

FIG. 7 shows a photograph of the interconnector material coated with the alumina/titania mixed slurry. A uniform alumina/titania thin film was successfully formed by dip coating on the surface of the interconnector material. A uniform alumina/titania thin film was successfully formed by the dip coating not only on the alumina honeycomb but also on a sheet material.
The fuel cell system according to the present invention can be used for various power supplies such as a mobile charger, a power supply of a small mobility, and a power supply of a walking support robot.
10    Fuel cell system
20    Fuel cell
34    Cathode
36    Anode

**Claims**

**1.** A fuel cell system (10), comprising:

a solid oxide fuel cell (20);
a fuel gas supply passage supplying a fuel gas to an anode (34) of the solid oxide fuel cell;
an oxidizer gas supply passage supplying an oxidizer gas to a cathode (34) of the solid oxide fuel cell; and
a capturing component provided in a portion on the fuel gas supply passage and/or the oxidizer gas supply passage and containing a capturing agent to capture a poisonous substance,
the capturing component being a thin film including the capturing agent formed on an inner surface of a gas channel (42, 44) of an interconnector (40a, 40b, 40c) of the solid oxide fuel cell (20) without being formed on a surface of the interconnector that is in direct contact with the cathode (34) or the anode (36),
the interconnector (40a, 40b, 40c) being made of ferritic stainless steel,
the poisonous substance being Cr and/or S, and
the capturing agent including an oxide having a corundum structure and/or a titania-based oxide.

**2.** The fuel cell system according to claim 1, wherein the oxide having the corundum structure is alumina.

**3.** The fuel cell system according to claim 1 or 2, wherein the titania-based oxide includes

(a)

$$TiO_x \ (1.5 \leq x \leq 2.0),$$

or
(b)

$$TiO_x \ (1.5 \leq x \leq 2.0)$$

dissolving at least one element selected from a group consisting of alkali metal elements, alkaline-earth metal elements, and rare-earth metal elements.

**Patentansprüche**

1. Brennstoffzellensystem (10) mit:

   einer Festoxid-Brennstoffzelle (20);
   einem Brennstoffgaszufuhrkanal, der einer Anode (34) der Festoxid-Brennstoffzelle ein Brennstoffgas zuführt;
   einem Oxidationsgaszufuhrkanal, der einer Kathode (34) der Festoxid-Brennstoffzelle ein Oxidationsgas zuführt; und
   einer Aufnahmekomponente, die in einem Abschnitt an dem Brennstoffgaszufuhrkanal und/oder dem Oxidationsgaszufuhrkanal vorgesehen ist und ein Aufnahmemittel zum Aufnehmen einer giftigen Substanz enthält, bei dem die Aufnahmekomponente ein dünner Film mit dem Aufnahmemittel ist, der an einer Innenfläche eines Gaskanals (42, 44) eines Zwischenverbinders (40a, 40b, 40c) der Festoxid-Brennstoffzelle (20) ausgebildet ist, ohne auf einer Oberfläche des Zwischenverbinders, die in direktem Kontakt mit der Kathode (34) oder der Anode (36) ist, ausgebildet zu sein,
   der Zwischenverbinder (40a, 40b, 40c) aus einem ferritischen Edelstahl besteht,
   die giftige Substanz Cr und/oder S ist und
   das Aufnahmemittel ein Oxid mit einer Korundstruktur und/oder ein titandioxidbasiertes Oxid aufweist.

2. Brennstoffzellensystem nach Anspruch 1, bei dem das Oxid mit der Korundstruktur Aluminiumoxid ist.

3. Brennstoffzellensystem nach Anspruch 1 oder 2, bei dem das titandioxidbasierte Oxid

   (a)

   $$TiO_x\ (1{,}5 \leq x \leq 2{,}0)$$

   oder
   (b)

   $$TiO_x\ (1{,}5 \leq x \leq 2{,}0),$$

   das mindestens ein Element löst, das aus einer Gruppe ausgewählt ist, die besteht aus Alkalimetallelementen, Erdalkalimetallelementen und Seltenerdmetallelementen,
   aufweist.

**Revendications**

1. Système de pile à combustible (10), comprenant :

   une pile à combustible à oxyde solide (20) ;
   un passage d'alimentation en gaz combustible fournissant un gaz combustible à l'anode (34) de la pile à combustible à oxyde solide ;
   un passage d'alimentation en gaz oxydant fournissant un gaz oxydant à une cathode (34) de la pile à combustible à oxyde solide ; et
   un composant de capture fourni dans une partie du passage d'alimentation en gaz combustible et/ou du passage d'alimentation en gaz oxydant et contenant un agent de capture pour capturer une substance toxique,
   le composant de capture est un film mince comprenant l'agent de capture formé sur une surface intérieure d'un canal de gaz (42, 44) d'un interconnecteur (40a, 40b, 40c) de la pile à combustible à oxyde solide (20) sans être formé sur une surface de l'interconnecteur qui est en contact direct avec la cathode (34) ou l'anode (36),
   l'interconnecteur (40a, 40b, 40c) étant en acier inoxydable ferritique,
   la substance toxique étant le Cr et/ou le S, et
   l'agent de capture comprenant un oxyde ayant une structure de corindon et/ou un oxyde à base de titane.

2. Système de pile à combustible selon la revendication 1, dans lequel l'oxyde ayant une structure de corindon est de l'alumine.

3. Système de pile à combustible selon la revendication 1 ou 2, dans lequel l'oxyde à base de titane comprend

(a)

$$TiO_x \ (1,5 \leq x \leq 2,0),$$

ou
(b)

$$TiO_x \ (1,5 \leq x \leq 2,0)$$

dissolvant au moins un élément choisi dans un groupe constitué d'éléments de métaux alcalins, d'éléments métalliques alcalino-terreux et d'éléments métalliques terreux rares.

FIG. 1 <u>10</u>

FIG. 2
20

FIG. 3

FIG. 4

FIG. 5

FIG. 6

FIG. 7

**EP 3 751 654 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017216071 A
- JP 5608674 B
- JP 5364393 B
- US 20130230792 A1